(19) Europäisches Patentamt
European Patent Office
Office européen des brevets

(11) Publication number: **0 008 177**
**B1**

# (12) EUROPEAN PATENT SPECIFICATION

(45) Date of publication of patent specification: **26.08.81**

(21) Application number: **79301496.0**

(22) Date of filing: **27.07.79**

(51) Int. Cl.³: **C 08 L 21/00,** C 08 K 5/44 //C07C145/02, C07C155/02

(54) **Vulcanizable rubber compositions containing substituted carbamic acid esters.**

(30) Priority: **27.09.78 US 946242**
**31.07.78 US 929769**

(43) Date of publication of application:
**20.02.80 Bulletin 80/4**

(45) Publication of the grant of the European patent:
**26.08.81 Bulletin 81/34**

(84) Designated Contracting States:
**BE DE FR GB IT**

(56) References cited:
**SU - A - 396 326**
**US - A - 3 810 928**

**CHEMICAL ABSTRACTS, vol. 82, 1975 page 78.**

(73) Proprietor: **MONSANTO COMPANY**
**Patent Department 800 North Lindbergh Boulevard**
**St. Louis, Missouri 63166 (US)**

(72) Inventor: **Morita, Eiichi**
**2934 Denise Drive**
**Copley, Ohio 44321 (US)**

(74) Representative: **Lunt, John Cooper et al,**
**Monsanto House 10-18 Victoria Street**
**London, SW1H ONQ (GB)**

**EP 0 008 177 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Vulcanizable rubber compositions containing substituted carbamic acid esters

This invention relates to improved vulcanizable rubber compositions inhibited from premature vulcanization and to an improved process for inhibiting premature vulcanization of rubber using aryl carbamic acid esters which are especially potent premature vulcanization inhibitors.

## BACKGROUND OF THE INVENTION

N-(Arylthio)carbamic acid esters and N,N-di(arylthio)carbamic acid esters are known prevulcanization inhibitors for rubber. Japanese Patent 49—14533. The di-thio substituted esters are more potent inhibitors but are more expensive since two moles of sulfenyl halide are required when making the compound. The mono-thio substituted esters exhibit reduced inhibitor activity.

## SUMMARY OF THE INVENTION

It has now been discovered that N-(thio) aryl carbamic acid esters are especially potent premature vulcanization inhibitors. The presence of a benzene radical attached to the nitrogen atom enhances the inhibitor activity. Accordingly, vulcanizable rubber compositions of the invention comprise sulfur-vulcanizable rubber, sulfur-vulcanizing agent, organic vulcanization accelerating agent and, in an amount effective to inhibit premature vulcanization, a compound of the formula

$$R-S-\underset{R_2}{N}-\overset{O}{\overset{\|}{C}}-X-R_1$$

wherein

X is oxygen or sulfur, R is $C_1$—$C_{12}$ primary or secondary alkyl or said alkyl radical substituted by formyl or $C_2$—$C_7$ acyl, $C_7$—$C_{10}$ aralkyl, $C_5$—$C_{12}$ cycloalkyl, or $R_2$; $R_1$ is $C_1$—$C_{12}$ alkyl, $C_7$—$C_{10}$ aralkyl, $C_5$—$C_{12}$ cycloalkyl, or $R_2$; $R_2$ is phenyl, naphthyl and phenyl substituted by $(—R_3)_x$ wherein x is 1, 2, 3 and $R_3$ is $C_1$—$C_{12}$ alkyl, $C_1$—$C_{12}$ alkoxy, $C_1$—$C_{12}$ alkylthio, chloro, bromo, cyano or nitro.

Inhibitors of the invention may be prepared by reacting a sulfenyl chloride either with an alkali metal salt of a carbamic acid ester or with a carbamic acid ester in the presence of a hydrogen chloride acceptor. The carbamic acid ester intermediates may be prepared by reacting an isocyanate and an alcohol, preferably in the presence of an amine catalyst. Certain inhibitors of the invention and suitable procedures for preparing them are described in USSR Patent 396,326.

Examples of satisfactory R, $R_1$ and $R_2$ radicals (except R cannot be tertiary alkyl) are methyl, ethyl, propyl, isopropyl, n-butyl, sec.butyl, isobutyl, t-butyl (1,1-dimethylethyl), pentyl, hexyl, heptyl, octyl, t-(octyl-1,1,3,3 tetramethyl butyl), nonyl, decyl, dodecyl, cyclopentyl, cyclohexyl, 4-methylcyclohexyl, cycloheptyl, cyclooctyl, cyclodecyl, cyclododecyl, benzyl, α-methylbenzyl, α,α-dimethylbenzyl, phenethyl, phenyl, naphthyl, 4-methylphenyl, 4-chlorophenyl, 2-methyl-4-t-butylphenyl, 4-t-butylphenyl, 2-methylphenyl, 3-methylphenyl, 4-methoxyphenyl, 4-methylthiophenyl, and 3-isopropylphenyl. Examples of satisfactory acyl radicals are acetyl, propionyl and butyryl.

Compounds in which $R_2$ is phenyl comprise a preferred subclass of inhibitors. Compounds in which R is $C_5$—$C_8$ cycloalkyl or secondary alkyl, especially isopropyl, comprise another preferred subclass of inhibitors. Compounds in which $R_2$ is phenyl, $R_1$ is methyl, X is oxygen, and R is $C_5$—$C_8$ cycloalkyl or $C_3$—$C_8$ secondary alkyl are especially preferred.

Illustrative examples of inhibitors of the invention are:

(Cyclohexylthio)phenylcarbamic acid, methyl ester
(Phenylthio)phenylcarbamic acid, methyl ester
(Isopropylthio)phenylcarbamic acid, methyl ester
(Benzylthio)phenylcarbamic acid, methyl ester
(Methylthio)phenylcarbamic acid, methyl ester
(α-methylbenzylthio)phenylcarbamic acid, methyl ester
(Cyclohexylthio)phenylcarbamic acid, phenyl ester
(Phenylthio)phenylcarbamic acid, phenyl ester
(Isopropylthio)phenylcarbamic acid, phenyl ester
(Benzylthio)phenylcarbamic acid, phenyl ester
(Methylthio)phenylcarbamic acid, phenyl ester
(α-methylbenzylthio)phenylcarbamic acid, phenyl ester
(Cyclohexylthio)phenylcarbamic acid, cyclohexyl ester
(Phenylthio)phenylcarbamic acid, cyclohexyl ester
(Isopropylthio)phenylcarbamic acid, cyclohexyl ester
(Benzylthio)phenylcarbamic acid, cyclohexyl ester

(Methylthio)phenylcarbamic acid, cyclohexyl ester
(α-methylbenzylthio)phenylcarbamic acid, cyclohexyl ester
(Cyclohexylthio)phenylcarbamic acid, benzyl ester
(Isopropylthio)phenylcarbamic acid, benzyl ester
(Phenylthio)phenylcarbamic acid, benzyl ester
and the corresponding carbamothioic acid esters.

The inhibitors of the invention are incorporated into rubber stocks by mixing on a mill or in an internal mixer such as a Banbury mixer. However, the inhibitors may be incorporated by addition to latex, if desired. The process of the invention is particularly applicable to sulfur-vulcanizable rubber compositions which rubber compositions contain a sulfur vulcanizing agent such as an amine disulfide or a polymeric polysulfide but preferably, the vulcanizing agent is elemental sulfur. Rubber compositions containing organic accelerating agents are particularly improved by the inhibitors of the invention. Any organic accelerating agents in an amount effective (generally about 0.1—5 parts by weight accelerator per 100 parts by weight rubber) to accelerate the sulfur vulcanization of rubber is satisfactory in the practice of this invention. Examples of suitable accelerators are described in U.S. Patent 3,546,185, col. 9, lines 53—75 and in U.S. Patent 3,780,001, col. 4, lines 43—72. The process of the invention is applicable to a wide variety of natural and synthetic rubbers and mixtures thereof and especially applicable to diene rubbers. Examples of satisfactory rubbers are described in U.S. Patent 3,546,185, col. 10, lines 15—21 and U.S. Patent 3,780,001, col. 5, lines 5—33. The vulcanizable composition may also contain conventional compounding ingredients such as reinforcing pigments, extenders, processing oils, antidegradants and the like.

Small amounts of inhibitors are effective to inhibit premature vulcanization. Improvements in processing safety may be observed with 0.05 parts or less of inhibitor per 100 parts rubber. Although there is no upper limit in the amount of inhibitor used, generally the amount does not exceed 5 parts inhibitor per 100 parts rubber. Typically, the amount of inhibitor added is about 0.1 to 2.5 parts per 100 parts rubber with amounts of about 0.2 to 1 part inhibitor per 100 parts rubber being normally used. Methods for determining scorch times and curing characteristics of rubber stocks used in demonstrating this invention are described in U.S. 3,546,185, col. 13, lines 30—53.

PREFERRED EMBODIMENTS

A suitable procedure for preparing inhibitors of the invention comprises adding, at between 0—75°C, usually at about room temperature, a sulfenyl chloride to a slurry of a carbamic acid ester (or thiocarbamic acid ester) in an inert organic medium, such as heptane, in the presence of an acid acceptor, such as triethylamine. The amine salt by-product is removed by filtration. The filtrate is washed with water and dried with sodium sulfate. The product is recovered by evaporating the solvent and is further purified by conventional procedures.

An alternate procedure for preparing inhibitors of the invention comprises reacting a sulfenyl chloride and an alkali metal salt of a carbamic acid ester. The carbamic acid ester alkali metal salt intermediate may be prepared by reacting an alkali metal alcoholate and a carbamic acid ester in an inert organic medium. The alcohol by-product is stripped from the reaction mixture by distillation. The alcoholate reactant is selected so that the alcohol portion will not exchange with the ester, preferably, the alcohol portion and ester are identical. The resulting slurry of carbamic acid ester alkali metal salt may be reacted, without further purification, with the sulfenyl chloride reactant. The sulfenyl chloride is generally added dropwise at room temperature to the aforesaid slurry. Salt by-product and any unreacted carbamic acid ester alkali metal salt is removed by filtration. The product is recovered by evaporation and generally is further purified by recrystallization from any appropriate solvent, such as, hexane.

Example 1

To a suitable reactor equipped with a stirring and temperature controlling means, there are charged phenyl carbamothioic acid, S-cyclohexyl ester, 41.1 g. (0.20 m), triethylamine, 20.4 g. and 200 ml of heptane. While stirring, a solution of cyclohexanesulfenyl chloride (0.21 m) in 150 ml of heptane is added dropwise at 24—26°C over a 50 minute period. After stirring an additional 30 minutes, 200 ml of water is added. The reaction mixture is filtered and the organic layer of the filtrate is separated and washed two times with 200 ml portions of water. After drying over $Na_2SO_4$, the organic layer is stripped by vacuum distillation to give 58.2 grams of solid crude product. The crude product is slurried in water, filtered and air-dried. (Cyclohexylthio)phenylcarbamothioic acid, S-cyclohexyl ester, (56.1 g) a white solid m.p. 89—90°C, is recovered. Chemical analysis gives 18.51% sulfur compared with 18.34% sulfur calculated for $C_{19}H_{27}NOS_2$.

Example 2

To a stirred slurry comprising 0.25 moles of sodium phenylcarbamic acid, methyl ester and 250 ml of heptane, there is added, at 25°C over a period of 40 minutes, a heptane solution of 0.25 moles of 2-propanesulfenyl chloride. Stirring is continued for 2 hours, then the reaction mixture is left standing

over the weekend. Water is added and the reaction mixture is filtered. The organic layer of the filtrate is washed with water and the solvent is then removed by vacuum distillation. The residue is washed with heptane and air-dried. (Isopropylthio)phenylcarbamic acid, methyl ester, m.p. 52—53°C, recrystallized from heptane, is recovered. Analysis gives 13.89% sulfur compared with 14.23% sulfur calculated for $C_{11}H_{15}NO_2S$.

Other compounds prepared in a similar manner are shown in Table 1.

Table 1

| Example No. | Name | Melting Point, °C | Sulfur Analysis, % Calc. | Found |
|---|---|---|---|---|
| 3 | (Cyclohexylthio)phenylcarbamic acid, methyl ester | 78—79 | 12.08 | 11.92 |
| 4 | (Phenylthio)phenylcarbamic acid, methylester | 66—67 | 12.36 | 12.32 |
| 5 | (Cyclohexylthio)phenylcarbamic acid, phenyl ester | 85 | 9.79 | 10.47 |
| 6 | (Isopropylthio)phenylcarbamic acid, phenyl ester | 95—96 | 11.16 | 11.57 |
| 7 | (Phenylthio)phenylcarbamic acid, phenyl ester | 86.86.5 | 9.98 | 10.53 |
| 8 | (Cyclohexylthio)phenylcarbamic acid, 2-(1,1-dimethylethyl)-5-methyl phenyl ester | 99—99.5 | 8.06 | 8.23 |
| 9 | (Cyclohexylthio)phenylcarbamothioic acid, (1,1-dimethylethyl)-S-ester | 82—83 | 19.82 | 18.40 |
| 10 | (Cyclohexylthio)phenylcarbamothioic acid, S-phenyl ester | 67—67.5 | 18.67 | 18.55 |

The process of the invention is demonstrated by using the following natural rubber and synthetic rubber stocks.

| | Stocks | |
|---|---|---|
| | NR | SBR/PB |
| Smoked sheets | 100 | — |
| Oil-extended styrene-butadiene rubber 1712 | — | 89 |
| Cis-4-polybutadiene rubber | — | 35 |
| Carbon black | 45 | 67 |
| Zinc oxide | 3 | 3 |
| Stearic acid | 2 | 1 |
| Processing oil | 5 | 15 |
| Wax | — | 2 |
| N-(1,3-dimethylbutyl)-N'-(phenyl)-p-phenylenediamine | 2 | 2 |
| Sulfur | 2.5 | 2.0 |
| N-(tert-butyl)-2-benzothiazole-sulfenamide | 0.5 | 1.2 |
| | 160 | 217.2 |

Portions of the masterbatches containing no inhibitors are controls. A quantity of inhibitor is incorporated into other portions of the masterbatches. The properties of the vulcanizable compositions are measured by conventional methods as described above. The results are shown in Tables 2, 3 and 4.

Referring to Table 2, stocks 1 and 5 are controls, respectively, for the stocks immediately following the controls. The data show that all the carbamic acid esters are potent inhibitors for premature vulcanization with 0.3 parts by weight inhibitor per 100 parts by weight rubber resulting in an increase of scorch delay between 59—120%. The data indicate that inhibitor activity is affected by the nature of the substituents. For example, the methyl esters are more potent inhibitors than the phenyl esters. Also, the isopropylthio and cyclohexylthio compounds are more effective than the corresponding phenylthio compounds.

The inhibitor activity of phenylcarbamothioic acid esters is illustrated in Table 3. The data show that the aliphatic esters exhibit greater inhibition of premature vulcanization than the corresponding phenyl ester.

Table 2

| Stocks | 1 | 2 | 3 | 4 | 5 | 6 | 7 | 8 | 9 |
|---|---|---|---|---|---|---|---|---|---|
| NR stocks | 160 → | | | | | | | | → |
| (Cyclohexylthio)phenylcarbamic acid, methyl ester | — | 0.3 | — | — | — | — | — | — | — |
| (Phenylthio)phenylcarbamic acid methyl ester | — | — | 0.3 | — | — | — | — | — | — |
| (Isopropylthio)phenylcarbamic acid, methyl ester | — | — | — | 0.3 | | | | | |
| (Cyclohexylthio)phenylcarbamic acid, phenyl ester | — | — | — | — | — | 0.3 | — | — | — |
| (Phenylthio)phenylcarbamic acid, phenyl ester | — | — | — | — | — | — | 0.3 | — | — |
| (Isopropylthio)phenylcarbamic acid, phenyl ester | — | — | — | — | — | — | — | 0.3 | — |
| (Cyclohexylthio)phenylcarbamic acid, 2-(1,1-dimethylethyl)-5-methyl phenyl ester | — | — | — | — | — | — | — | — | 0.3 |
| Mooney Scorch @ 121°C | | | | | | | | | |
| $t_5$, minutes | 36.1 | 72.9 | 60.1 | 79.5 | 33.3 | 60.6 | 53.0 | 65.0 | 59.3 |
| % increase in scorch delay | — | 102 | 67 | 120 | — | 82 | 59 | 95 | 78 |
| Stress-Strain @ 153°C | | | | | | | | | |
| $M_{100}$, MPa | 10.8 | 11.8 | 12.2 | 11.4 | 11.5 | 11.4 | 11.1 | 10.8 | 10.4 |
| UTS, MPa | 29.4 | 29.8 | 31.1 | 29.8 | 30.4 | 30.4 | 28.7 | 29.3 | 27.9 |
| Elong., % | 600 | 590 | 590 | 590 | 600 | 600 | 580 | 610 | 590 |

Table 3

| Stocks | 1 | 2 | 3 | 4 |
|---|---|---|---|---|
| NR stocks | 160 | 160 | 160 | 160 |
| (Cyclohexylthio)-phenylcarbamothioic acid, S-cyclohexyl ester | — | 0.3 | — | — |
| (Cyclohexylthio)-phenylcarbamothioic acid, S-(1,1 dimethyl-ethyl)ester | — | — | 0.3 | — |
| (Cyclohexylthio)-phenylcarbamothioic acid, S-phenyl ester | — | — | — | 0.3 |
| Mooney Scorch @ 121°C | | | | |
| $t_5$, minutes | 35.0 | 50.8 | 50.0 | 45.3 |
| % increase in scorch delay | — | 45 | 43 | 29 |
| Stress-Strain @ 153°C | | | | |
| $M_{300}$, MPa | 10.7 | 9.4 | 8.9 | 8.0 |
| UTS, MPa | 28.6 | 28.7 | 27.6 | 27.0 |
| Elong., % | 600 | 650 | 630 | 650 |

Table 4

| Stocks | 1 | 2 | 3 | 4 | 5 |
|---|---|---|---|---|---|
| SBR/PB stocks | 217.2 → | | | | |
| (Cyclohexylthio)phenyl-carbamic acid, methyl ester | — | 0.5 | — | — | — |
| (Cyclohexylthio)phenyl-carbamic acid, phenyl ester | — | — | 0.5 | — | — |
| (Cyclohexylthio)phenyl-carbamothioic acid, S-cyclohexyl ester | — | — | — | 0.5 | — |
| (Cyclohexylthio)phenyl-carbamothioic acid, S-1,1-dimethylethyl ester | — | — | — | — | 0.5 |
| Mooney Scorch @ 135°C | | | | | |
| $t_5$, minutes | 23.0 | 42.5 | 37.8 | 31.7 | 31.6 |
| % increase scorch safety | — | 85 | 65 | 38 | 37 |
| Stress-Strain @ 153°C | | | | | |
| $M_{300}$, MPa | 8.6 | 8.3 | 7.6 | 7.8 | 7.6 |
| UTS, MPa | 20.0 | 19.0 | 18.4 | 19.0 | 18.3 |
| Elong., % | 570 | 560 | 570 | 570 | 580 |

Table 5

| Stocks | 1 | 2 | 3 | 4 | 5 |
|---|---|---|---|---|---|
| NR stock | 160 ⟶ | | | | |
| (Phenylthio)phenylcarbamic acid, methyl ester | — | 0.3 | — | — | — |
| (Cyclohexylthio)phenyl-carbamic acid, methyl ester | — | — | 0.3 | — | — |
| Di(phenylthio)carbamic acid, ethyl ester | — | — | — | 0.3 | 0.3 |
| Mooney Scorch @ 121°C | | | | | |
| $t_5$, minutes | 25.0 | 45.2 | 50.7 | 40.9 | 41.9 |
| % increase in scorch delay | — | 81 | 103 | 64 | 68 |
| Stress-Strain @ 153°C | | | | | |
| $M_{300}$, MPa | 12.5 | 13.4 | 11.3 | 12.0 | 11.2 |
| UTS, MPa | 29.3 | 27.9 | 28.7 | 28.3 | 28.3 |
| Elong., % | 570 | 550 | 580 | 560 | 590 |

Styrene-butadiene rubber compositions of the invention are illustrated in Table 4. In synthetic rubber stocks slightly larger quantities of inhibitor are used, 0.5 parts by weight per 100 parts by weight rubber. If greater scorch delay is required larger quantities of inhibitor may be used. Of the four compounds tested, (cyclohexylthio)phenylcarbamic acid, methyl ester exhibits the greater potency.

Compositions of the invention are further illustrated in Table 5. Stock 1 is a control. Stock 3 shows that inhibitors containing cycloalkylthio radicals are especially potent inhibitors. Stock 4 and Stock 5 (duplicate experiments) illustrate a prior art inhibitor containing two phenylthio radicals. Surprisingly, an inhibitor of the invention containing a single phenylthio radical (Stock 2) exhibits greater inhibitor activity. Apparently, replacement of a phenylthio radical by a phenyl radical results in a superior class of inhibitors.

## Claims

1. A vulcanizable rubber composition comprising sulfur-vulcanizable rubber, sulfur vulcanizing agent, organic vulcanization accelerating agent, and a premature vulcanization inhibitor in an amount effective to inhibit premature vulcanization of the composition, characterised in that the premature vulcanization inhibitor is a compound of the formula

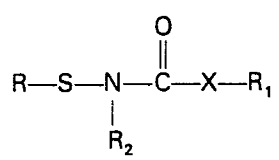

wherein

X is oxygen or sulfur, R is a $C_1$—$C_{12}$ primary or secondary alkyl radical, said alkyl radical substituted by formyl or $C_2$—$C_7$ acyl, $C_7$—$C_{10}$ aralkyl, $C_5$—$C_{12}$ cycloalkyl, or $R_2$; $R_1$ is $C_1$—$C_{12}$ alkyl, $C_7$—$C_{10}$ aralkyl, $C_5$—$C_{12}$ cycloalkyl or $R_2$; $R_2$ is phenyl, naphthyl or phenyl substituted by $(—R_3)_x$ wherein x is 1, 2 or 3 and $R_3$ is $C_1$—$C_{12}$ alkyl, $C_1$—$C_{12}$ alkoxy, $C_1$—$C_{12}$ alkylthio, chloro, bromo, cyano or nitro.

2. A composition of Claim 1 in which the vulcanizing agent is elemental sulfur and the rubber is a diene rubber.

3. A composition of Claim 2 in which $R_2$ is phenyl.

4. A composition of Claim 3 in which X is oxygen.

5. A composition of Claim 4 in which R and $R_1$ independently are $C_1$—$C_6$ alkyl, cyclohexyl or phenyl.

6. A composition of Claim 5 in which $R_1$ is methyl.

7. A composition of either of Claims 5 and 6 in which R is cyclohexyl or isopropyl.

8. A composition of Claim 3 in which X is sulfur, and R and $R_1$ are independently $C_{1-6}$ alkyl or cyclohexyl.

**Revendications**

1. Composition de caoutchouc vulcanizable, comprenant un caoutchouc vulcanisable au soufre, un agent de vulcanisation par le soufre, un agent organique d'accélération de vulcanisation et un inhibiteur de vulcanisation prématurée en quantité efficace pour inhiber la vulcanisation prématurée de la composition, caractérisée en ce que l'inhibiteur de vulcanisation prématurée est un composé ayant la formule:

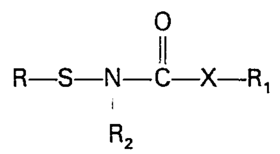

où X est l'oxygène ou le soufre, R est un radical alkyle primaire ou secondaire en $C_1$—$C_{12}$ ce radical alkyle à substitution formyl ou acyle en $C_2$—$C_7$, aralkyle en $C_7$—$C_{10}$, cycloalkyle en $C_5$—$C_{12}$ ou par $R_2$; $R_1$ est un groupe alkyle en $C_1$—$C_{12}$, aralkyle en $C_7$—$C_{10}$, cycloalkyle en $C_5$—$C_{12}$ ou $R_2$; $R_2$ est le groupe phényle, naphtyle ou phényle substitué par $(—R_3)_x$ où x vaut 1, 2 ou 3 et $R_3$ est un groupe alkyle en $C_1$—$C_{12}$, alcoxy en $C_1$—$C_{12}$, alkylthio en $C_1$—$C_{12}$, chloro, bromo, cyano ou nitro.

2. Composition selon la revendication 1, caractérisée en ce que l'agent de vulcanisation est du soufre élémentaire et le caoutchouc est un caoutchouc diénique.

3. Composition selon la revendication 2, caractérisée en ce que $R_2$ est le groupe phényle.

4. Composition selon la revendication 3, caractérisée en ce que X est l'oxygène.

5. Composition selon la revendication 4, caractérisée en ce que R et $R_1$ indépendamment sont des groupes alkyles en $C_1$—$C_6$, cyclohexyles ou phényles.

6. Composition selon la revendication 5, caractérisée en ce que $R_1$ est le groupe méthyle.

7. Composition selon la revendication 5 ou la revendication 6, caractérisée en ce que R est le groupe cycloalkyle ou isopropyle.

8. Composition selon la revendication 3, caractérisée en ce que X est le soufre, et R et $R_1$ sont indépendamment un groupe alkyle en $C_{1-6}$ ou le groupe cyclohexyle.

**Patentansprüche**

1. Vulkanisierbare Kautschukmasse, enthaltend einen mit Schwefel vulkanisierbaren Kautschuk, ein Schwefel-Vulkanisationsmittel, einen organischen Vulkanisationsbeschleuniger und einen Inhibitor der vorzeitigen Vulkanisation in einer die vorzeitige Vulkanisation der Masse inhibierenden Menge, dadurch gekennzeichnet, daß der Inhibitor der vorzeitigen Vulkanisation eine Verbindung der allgemeinen Formel

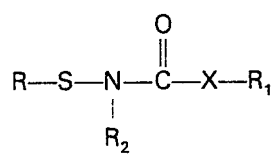

ist, in der

X ein Sauerstoffatom oder ein Schwefelatom,

R eine primäre oder sekundäre $C_1$—$C_{12}$-Alkylgruppe, die durch eine Formylgruppe oder eine $C_2$—$C_7$-Acylgruppe substituiert sein kann, eine $C_7$—$C_{10}$-Aralkylgruppe, eine $C_5$—$C_{12}$-Cycloalkylgruppe oder $R_2$,

$R_1$ eine $C_1$—$C_{12}$-Alkylgruppe, eine $C_7$—$C_{10}$-Aralkylgruppe, eine $C_5$—$C_{12}$-Cycloalkylgruppe oder $R_2$,

$R_2$ eine Phenylgruppe, eine Naphthylgruppe oder eine $(—R_3)_x$-substituiert Phenylgruppe, in der x 1, 2 oder 3 und

$R_3$ eine $C_1$—$C_{12}$-Alkylgruppe, eine $C_1$—$C_{12}$-Alkoxygruppe, eine $C_1$—$C_{12}$-Alkylthiogruppe, ein Chloratom, ein Bromatom, ein Cyanogruppe oder eine Nitrogruppe darstellen, bedeuten.

2. Masse nach Anspruch 1, dadurch gekennzeichnet, daß das Vulkanisationsmittel elementarer Schwefel und der Kautschuk ein Dienkautschuk ist.

3. Masse nach Anspruch 2, dadurch gekennzeichnet, daß $R_2$ eine Phenylgruppe bedeutet.

4. Masse nach Anspruch 3, dadurch gekennzeichnet, daß X ein Sauerstoffatom bedeutet.

5. Masse nach Anspruch 4, dadurch gekennzeichnet, daß R und $R_1$ unabhängig voneinander $C_1$—$C_6$-Alkylgruppen, Cyclohexylgruppen oder Phenylgruppen darstellen.

6. Masse nach Anspruch 5, dadurch gekennzeichnet, daß $R_1$ eine Methylgruppe darstellt.

7. Masse nach einem der Ansprüche 5 und 6, dadurch gekennzeichnet, daß R eine Cyclohexylgruppe oder eine Isopropylgruppe bedeutet.

8. Masse nach Anspruch 3, dadurch gekennzeichnet, daß X ein Schwefelatom und R und $R_1$ unabhängig voneinander $C_1$—$C_6$-Alkylgruppen oder Cyclohexylgruppen bedeuten.